# DEMANDE DE BREVET EUROPEEN

(11) **EP 1 972 495 A2**
(43) Date de publication de la demande: **24.09.2008**
(21) Numéro de dépôt: 08152814.3
(22) Date de dépôt: 14.03.2008
(51) Int. Cl.: B60Q 1/04

(54) **Poignée destinée à la manutention d'un boîtier d'un moyen d'éclairage/signalisation pour véhicule automobile et procédé de manutention d'un tel boîtier**

(30) Priorité: 20.03.2007 FR 0753931
(71) Demandeur: Peugeot Citroën Automobiles SA, 78140 Vélizy-Villacoublay (FR)
(72) Inventeur: Peron, Rodolphe, 95220, HERBLAY (FR)
(74) Mandataire: Vigand, Régis Louis Michel

(57) **Abrégé**

L'invention concerne une poignée de préhension destinée à la manutention d'un boîtier d'un moyen d'éclairage/signalisation à monter à la carrosserie d'un véhicule automobile.

Selon l'invention, la poignée de préhension (1) est caractérisée en ce qu'elle présente une forme générale en U dont l'une (4) des branches comporte à son extrémité un moyen d'encliquetage (5) et l'autre branche (6) comporte à son extrémité un ergot (7).

## Description

L'invention concerne une poignée de préhension destinée à la manutention d'un boîtier d'un moyen d'éclairage/signalisation à monter à la carrosserie d'un véhicule automobile.

Elle s'applique en particulier et de manière non limitative à la manutention d'un boîtier de projecteur avant de véhicule automobile.

L'assemblage ou le montage d'un boîtier de projecteur avant à la carrosserie d'un véhicule est une opération qui s'effectue manuellement et nécessite de la part de l'opérateur une certaine habileté compte tenu de l'encombrement relativement important que présente un tel boîtier.

Il n'est pas rare que lors de cette opération d'assemblage le boîtier de projecteur échappe des mains de l'opérateur, pouvant conduire à la casse du boîtier et, par conséquent, à diminuer la productivité et augmenter les coûts.

L'invention a pour but de pallier les inconvénients ci-dessus.

A cet effet, l'invention a pour objet une poignée de préhension qui est caractérisée en ce qu'elle présente une forme générale en U dont l'une des branches comporte à son extrémité un moyen d'encliquetage et l'autre branche comporte à son extrémité un ergot.

De préférence, le moyen d'encliquetage de la poignée comprend une languette recourbée sensiblement en forme de V dont l'une des branches peut être élastiquement rapprochée de l'autre.

L'invention vise également un ensemble à boîtier d'un moyen d'éclairage/signalisation pour véhicule et poignée de préhension amoviblement fixée au boîtier.

Avantageusement, la poignée présente une forme générale en U dont l'une des branches comporte à son extrémité un moyen pouvant s'encliqueter élastiquement et amoviblement dans un orifice du boîtier et l'autre branche comporte à son extrémité un ergot pouvant s'engager amoviblement dans un autre orifice du boîtier.

De préférence, le moyen d'encliquetage de la poignée comporte une languette recourbée sensiblement en forme de V dont l'une des branches peut être élastiquement rapprochée de l'autre lors de l'introduction du moyen d'encliquetage dans l'orifice correspondant du boîtier pour verrouiller amoviblement l'extrémité de la poignée à ce boîtier.

L'invention concerne aussi le bloc optique, projecteur avant ou feu arrière, apte à être utilisé en liaison avec une poignée de montage. De préférence, ce bloc optique de véhicule comporte un boîtier (2) muni de deux ouvertures (10) destinées à recevoir deux protubérances correspondantes d'une poignée de préhension. De préférence, les ouvertures (10) sont disposées de manière à pouvoir recevoir une poignée de préhension en forme de U dont le plan du U soit disposé orthogonalement au plan des ouvertures. Ainsi le montage du bloc optique sur véhicule en est facilité. De préférence, les ouvertures (10) sont disposées au niveau de la surface supérieure (2a) du boîtier (2). Ainsi, le transport et le montage du bloc optique sur véhicule en est facilité. De préférence, les ouvertures (10) sont situées dans des pattes (8) solidaires du boîtier (2). Ainsi, on évite de fragiliser le boîtier 2 lui-même. De préférence, les pattes (8) s'étendent perpendiculairement à la face supérieure (2a) du boîtier (2), à l'opposé de la glace (9) du bloc optique. Cette disposition permet le transport et le montage du bloc optique sur véhicule de manière très ergonomique.

Le boîtier comprend avantageusement deux pattes espacées solidaires de celui-ci et comportant respectivement les deux orifices dans lesquels peuvent s'engager le moyen d'encliquetage et l'ergot de la poignée.

En outre, le moyen d'éclairage de l'ensemble tel que défini ci-dessus est un projecteur avant.

De plus, le moyen de signalisation de l'ensemble tel que défini ci-dessus est un feu arrière.

L'invention vise enfin un procédé de manutention d'un boîtier d'un moyen d'éclairage/signalisation à monter à la carrosserie d'un véhicule et qui est caractérisé en ce qu'il consiste à amoviblement fixer au boîtier une poignée de préhension, saisir manuellement l'ensemble à poignée de préhension et boîtier pour disposer le boîtier à son emplacement de montage de la carrosserie du véhicule et retirer la poignée de préhension du boîtier après fixation de ce dernier à la carrosserie du véhicule.

De préférence, le procédé de manutention consiste à engager élastiquement et amoviblement dans un orifice du boîtier un moyen d'encliquetage de l'extrémité de l'une des branches de la poignée sensiblement en forme de U et à engager amoviblement dans un autre orifice du boîtier un ergot de l'extrémité de l'autre branche de la poignée.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple et dans lesquels:
- la figure 1 est une vue en perspective d'une poignée de préhension selon l'invention;
- la figure 2 est une vue en perspective d'un boîtier de projecteur équipé de la poignée de préhension de la figure 1;
- la figure 3 est une vue en perspective agrandie de la partie cerclée en III du boîtier de projecteur de la figure 2 ; et
- la figure 4 est une vue en perspective suivant la flèche IV du boîtier de projecteur sans la poignée de préhension.

L'invention va être décrite dans l'application au montage d'un boîtier de projecteur avant à la carrosserie d'un véhicule automobile, mais il est bien entendu qu'elle peut s'appliquer également au montage de tout autre élément ou pièce différent, tel que par exemple un boîtier de feu arrière du véhicule.

Comme représenté aux figures, la référence 1 désigne une poignée de préhension pouvant être amoviblement fixée à un boîtier de projecteur avant 2 destiné à être monté à la carrosserie d'un véhicule automobile.

Une fois le projecteur avant assemblé à la carrosserie du véhicule, l'opérateur peut retirer la poignée de préhension 1 du projecteur et utiliser à nouveau cette poignée pour le montage d'autres boîtiers de projecteurs sur une chaîne d'assemblage à des carrosseries de véhicules automobiles.

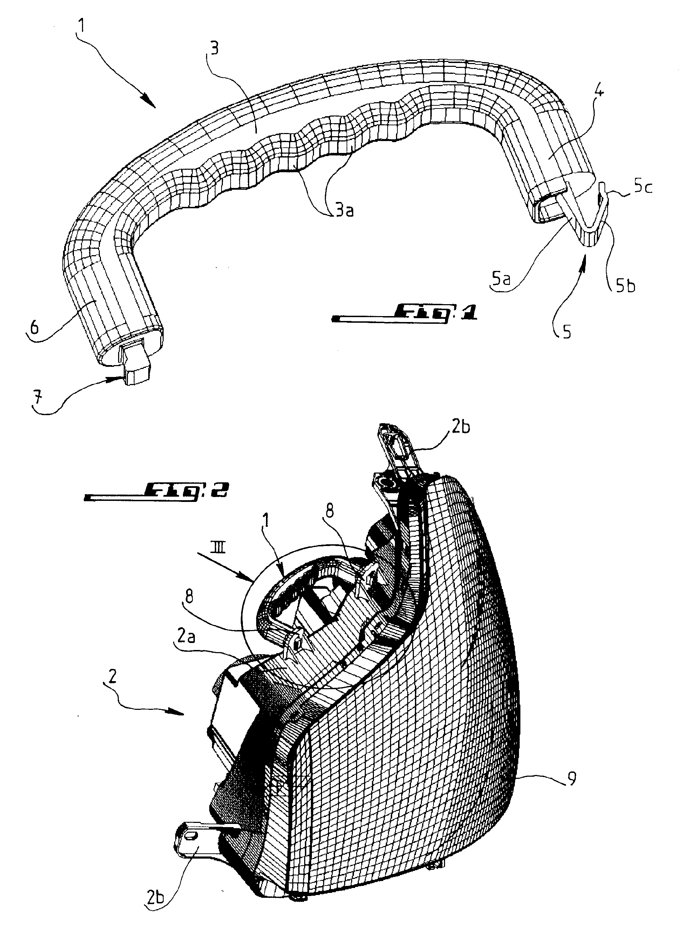

Comme représenté en particulier en figure 1, la poignée de préhension 1 présente une forme générale de U dont l'âme 3 est allongée et comporte des empreintes 3a facilitant la préhension de la poignée.

L'une 4 des branches parallèles de la poignée 1 comporte à son extrémité un moyen d'encliquetage 5 comprenant une languette recourbée sensiblement en forme de V.

L'une 5a des branches de la languette est solidaire de l'extrémité de la branche 4 coaxialement à cette dernière.

La branche 5a du moyen d'encliquetage est rigide et son autre branche 5b peut être rapprochée élastiquement de la branche 5a. A cet effet, les deux branches 5a et 5b sont reliées l'une à l'autre par une pliure. L'extrémité de la branche 5b du moyen d'encliquetage est recourbée de manière à définir un décrochement 5c dont le rôle sera expliqué ultérieurement.

La branche 5b du moyen d'encliquetage est située du côté de la branche 5a opposé à l'espace entre les branches 4,6 de la poignée 1.

L'autre branche 6 de la poignée de préhension 1 comporte à son extrémité un ergot 7. L'ergot 7 est dirigé dans un sens opposé à la branche 4 de la poignée de préhension 1.

De préférence, la poignée 1, le moyen d'encliquetage 5 et l'ergot 7 sont réalisés en une seule pièce par moulage d'une matière plastique.

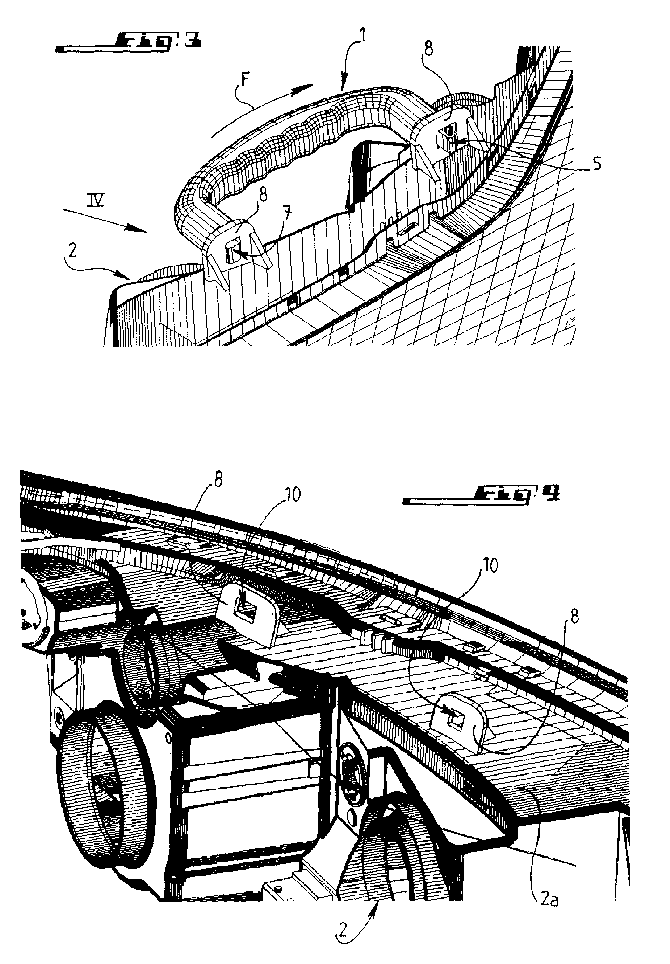

Comme cela ressort mieux des figures 3 et 4, le boîtier de projecteur avant 2 comprend deux pattes espacées 8 solidaires sensiblement perpendiculairement de la face supérieure 2a du boîtier 2 à l'opposé de la glace 9 du projecteur. Les deux pattes 8 font saillie vers le haut. De préférence, les deux pattes 8 sont réalisées par moulage avec le boîtier.

Les deux pattes 8 comportent chacune un orifice traversant 10. Elles sont espacées l'une de l'autre dans un même plan de manière que l'un des orifices 10 d'une patte 8 puisse recevoir le moyen d'encliquetage 5 tandis que l'orifice 10 de l'autre patte puisse recevoir l'ergot 7.

L'invention va être maintenant expliquée dans la situation d'un opérateur se trouvant sur une chaîne de montage de boîtiers de projecteurs avant à des carrosseries de véhicules automobiles.

Pour permettre le montage d'un boîtier de projecteur avant à la carrosserie d'un véhicule, l'opérateur saisit la poignée de préhension 1 pour la fixer aux deux pattes 8 du boîtier 2. A cet effet, il présente la poignée 1 de manière que le moyen d'encliquetage 5 et l'ergot 7 soient disposés en regard respectivement des deux orifices 10 des pattes 8. Par poussée exercée sur la poignée 1, la branche 5b du moyen d'encliquetage 5 est rapprochée élastiquement de la branche rigide 5a jusqu'à ce que le décrochement 5c de cette branche vienne élastiquement en butée en arrière du bord de l'orifice correspondant 10 de la patte 8 sensiblement perpendiculaire à la face supérieure 2a du boîtier 2. En même temps, l'ergot 7 s'engage dans l'orifice 10 de l'autre patte 8 de manière à venir en butée en arrière du bord de cet orifice de la patte 8.

De la sorte, la poignée 1 est fixée au boîtier 2 et l'opérateur peut aisément saisir le boîtier du projecteur 2 par la poignée 1 pour transporter le boîtier 2 à son emplacement de montage dans la carrosserie du véhicule. Une fois le boîtier 2 fixé par ses pattes de fixation 2b à la carrosserie du véhicule, l'opérateur peut alors retirer la poignée 1 du boîtier 2 en exerçant sur celle-ci une force F sensiblement parallèle à la direction longitudinale de l'âme 3 de la poignée 1 et de sens allant vers le moyen d'encliquetage. De la sorte, la branche 5b est rapprochée élastiquement de la branche 5a, permettant ensuite à l'opérateur le retrait par traction de la poignée 1 du boîtier 2. Le cas échéant, la poignée 1 peut être retirée du boîtier 2 à l'aide d'un outil, tel qu'un tournevis, appliqué sur la branche 5b du moyen d'encliquetage 5 pour la rapprocher élastiquement de la branche 5a et par conséquent désengager l'extrémité de la branche 4 de la poignée 1 de l'orifice correspondant 10 de la patte 8. Ensuite, l'ergot 7 est désengagé de l'orifice 10 de l'autre patte 8.

La poignée de préhension 1 peut alors être à nouveau utilisée pour la fixer amoviblement à un autre boîtier de projecteur destiné à être fixé à la carrosserie du même véhicule ou à la carrosserie d'un véhicule suivant de la chaîne de montage.

Il est à noter que la poignée de préhension 1 peut être livrée par un fournisseur en étant assemblée au boîtier de projecteur.

L'invention permet de faciliter la prise en main du projecteur avant qui est une pièce plutôt encombrante. Elle facilite également le positionnement du projecteur dans la carrosserie du véhicule avant fixation à cette dernière. La poignée de préhension 1, une fois démontée, libère une zone de la carrosserie permettant le montage d'autres pièces environnantes.

## Revendications

1. Poignée de préhension (1), **caractérisée en ce qu'**elle présente une forme générale en U dont l'une (4) des branches comporte à son extrémité un moyen d'encliquetage (5) et l'autre branche (6) comporte à son extrémité un ergot (7).

2. Poignée selon la revendication 1, **caractérisée en ce que** le moyen d'encliquetage (5) de la poignée (1) comprend une languette recourbée sensiblement en forme de V dont l'une (5b) des branches peut être élastiquement rapprochée de l'autre (5a).

3. Ensemble à boîtier (2) d'un moyen d'éclairage/signalisation pour véhicule et poignée de préhension (1) amoviblement fixée au boîtier (2).

4. Ensemble selon la revendication 3, **caractérisé en ce que** la poignée (1) présente une forme générale en U dont l'une (4) des branches comporte à son extrémité un moyen (5) pouvant s'encliqueter élastiquement et amoviblement dans un orifice (10) du boîtier (2) et l'autre branche (6) comporte à son extrémité un ergot (7) pouvant s'engager amoviblement dans un autre orifice du boîtier (2).

5. Ensemble selon la revendication 4, **caractérisé en ce que** le moyen d'encliquetage (5) de la poignée (1) comporte une languette recourbée sensiblement en forme de V dont l'une (5b) des branches peut être élastiquement rapprochée de l'autre (5a) lors de l'introduction du moyen d'encliquetage (5) dans l'orifice (10) correspondant du boîtier (2) pour verrouiller amoviblement l'extrémité de la poignée (1) à ce boîtier (2).

6. Ensemble selon la revendication 5, **caractérisé en ce que** le boîtier (2) comprend deux pattes (8) espacées solidaires de celui-ci et comportant respectivement les deux orifices (10) dans lesquels peuvent s'engager le moyen d'encliquetage (5) et l'ergot (7) de la poignée (1).

7. Ensemble selon l'une des revendications 3 à 6, **caractérisé en ce que** le moyen d'éclairage est un projecteur avant.

8. Ensemble selon l'une des revendications 3 à 6, **caractérisé en ce que** le moyen de signalisation est un feu arrière.

9. Procédé de manutention d'un boîtier (2) d'un moyen d'éclairage/signalisation à monter à la carrosserie d'un véhicule, **caractérisé en ce qu'**il consiste à amoviblement fixer au boîtier (2) une poignée de préhension (1), saisir manuellement l'ensemble à poignée de préhension (1) et boîtier (2) pour disposer le boîtier (2) à son emplacement de montage de la carrosserie du véhicule et retirer la poignée de préhension (1) du boîtier (2) après fixation de ce dernier à la carrosserie du véhicule.

10. Procédé de manutention selon la revendication 9, **caractérisé en ce qu'**il consiste à engager élastiquement et amoviblement dans un orifice (10) du boîtier (2) un moyen d'encliquetage (5) de l'extrémité de l'une (4) des branches de la poignée (1) sensiblement en forme de U et à engager amoviblement dans un autre orifice (10) du boîtier (2) un ergot (7) de l'extrémité de l'autre branche (6) de la poignée (1).

11. Bloc optique de véhicule comportant un boîtier (2) muni de deux ouvertures (10) destinées à recevoir deux protubérances correspondantes d'une poignée de préhension.

12. Bloc optique selon la revendication 11, **caractérisé en ce que** les ouvertures (10) sont disposées de manière à pouvoir recevoir une poignée de préhension en forme de U dont le plan du U soit disposé orthogonalement au plan des ouvertures.

13. Bloc optique selon l'une quelconque des revendications 11 à 12, **caractérisé en ce que** les ouvertures (10) sont disposées au niveau de la surface supérieure (2a) du boîtier (2).

14. Bloc optique selon l'une quelconque des revendications 11 à 13, **caractérisé en ce que** les ouvertures (10) sont situées dans des pattes (8) solidaires du boîtier (2).

15. Bloc optique selon la revendication 14, **caractérisé en ce que** les pattes (8) s'étendent perpendiculairement à la face supérieure (2a) du boîtier (2), à l'opposé de la glace (9) du bloc optique.
